# EUROPEAN PATENT SPECIFICATION

(11) **EP 0 430 640 B1**
(45) Date of publication and mention of the grant of the patent: **27.03.1996**
(21) Application number: 90312859.3
(22) Date of filing: 27.11.1990
(51) Int. Cl.: C08L 79/08

(54) **Polyimide based resin composition**
Polyimidhaltige Harzzusammensetzung
Composition de résine à partir de polyimides

(30) Priority: 30.11.1989 JP 309100/89; 05.12.1989 JP 314394/89; 30.07.1990 JP 199058/90
(43) Date of publication of application: 05.06.1991
(60) Divisional application: 94202755.8
(73) Proprietor: MITSUI TOATSU CHEMICALS, Inc., Chiyoda-Ku Tokyo 100 (JP)
(72) Inventor: Tsutsumi, Toshihiko, Yokohama-shi, Kanagawa-ken 244 (JP); Morikawa, Shuichi, Hakone-Machi, Kanagawa-ken 250-03 (JP); Nakakura, Toshiyuki, Yokohama-shi, Kanagawa-ken 247 (JP); Shimamura, Katunori, Minamiashigara-shi, Kanagawa-ken 250-01 (JP); Takahashi, Toshiaki, Kanagawa-Ken 257 (JP); Koga, Nobuhito, Kanagawa-Ken 247 (JP); Ohta, Masahiro, Fukuoka-Ken, 836 (JP); Morita, Atsushi, Kanagawa-Ken 244 (JP); Yamaguchi, Akihiro, Kanagawa-Ken, 248 (JP)
(74) Representative: Rackham, Anthony Charles

(56) References cited:
- EP-A- 0 163 464
- EP-A- 0 313 407
- EP-A-00 330 113
- EP-A-02 175 633
- EP-A-02 672 893
- FR-A- 2 311 815

## Description

The present invention relates to a molding resin composition which comprises polyimide resin as a principal component. More particularly, the invention relates to a polyimide-based moulding resin composition which comprises polyimide resin and polyester resin capable of forming an anisotoropic molten phase and is excellent in thermal resistance, chemical resistance, mechanical strength and processability.

Conventionally, polyimide has extremely outstanding thermal resistance, is excellent in mechanical strength and dimensional stability, and additionally has flame retardance and electrical insulation property. Polyimide has hence been used in areas such as electrical and electronic parts, space and aeronautic members, and transportation equipment. In the future, it is expected that the use of polyimide will be extended to areas where thermal resistance is required. Various kinds of polyimide which exhibit excellent properties have been developed.

Although polyimide is excellent in thermal resistance, means such as sinter molding is generally required in the case of using polyimide as a molding material. Even though polyimide is thermoplastic and melt-moldable, processing under high temperature and high pressure is required in many cases. When polyimide is processed under such high temperature and pressure, polyimide is, though excellent in thermal resistance, thermally deteriorated or oxidized which decreases mechanical strength and which makes molding of thin-walled articles difficult.

Some kinds of polyimide have slow rates of crystallization in the processing stage and molded articles can be obtained in an amorphous state. Even though heat treatment is carried out in order to enhance the crystallinity of such polyimides, dimensional changes resulting from crystallization have led severe restrictions on the application of such polyimides to areas such as precision parts.

On the other hand, when processability is improved, the polyimide has a lowered glass transition temperature and is soluble in halogenated hydrocarbons. That is, the polyimide has decreased performance in view of thermal and solvent resistances. Consequently, conventionally proposed polyimides have both merits and drawbacks, and, it has been desired to accomplish further improvement.

The present inventors have also found a novel polyimide resin having recurring units represented by the formula I : 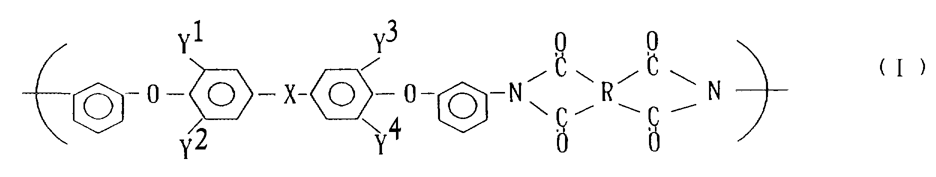 wherein X is a direct bond, divalent hydrocarbon having from 1 to 10 carbon atoms, hexafluorinated isopropylidene, carbonyl, thio or sulfonyl; Y¹, Y, Y³, and Y⁴, are individually hydrogen, lower alkyl, lower alkoxy, chlorine or bromine; R is a tetravalent radical selected from an aliphatic having 2 or more carbon atoms, alicyclic, monocyclicaromatic or fused polycyclic aromatic radical or a polycyclic aromatic radical connected to each other through a direct bond or a bridge member [Japanese Laid-Open Patent SHO 61-143478(1986), 62-68817(1987), 62-86021(1987), 62-235381(1987) and 63-128025(1988)].

The polyimide resin thus found is a novel thermal-resistant resin having various favorable properties such as excellent mechanical strength, thermal property, electrical property and solvent resistance in addition to its essential thermal resistance.

The polyimide resin is excellent in thermal resistance, mechanical strength and electrical properties as compared with conventional engineering plastics represented by polyethylene terephthalate, polybutylene terephthalate, polyether sulfone, polysulfone and polyphenylene sulfide. Consequently, the polyimide resin having improved processability in addition to its substantially outstanding chracteristics can be expected to be use in fields where conventional engineering plastics are not satisfactory.

EP 0 217 563 describes the addition of a liquid crystal polymer to an amorphous or semi-crystalline base polymer to provide reinforcing fibres of the liquid crystal polymer within the base polymer and give, inter alia, high tensile strength to teh composite.

One object of the present invention is to provide a polyimide-based molding resin composition having excellent flowability in a molten state in addition to its substantially outstanding characteristics.

Another object of the present invention is to provide a polyimide-based resin composition having an increased rate of crystallization and an improved dimensional stability of moulded articles in a heat-treatment step.

The present invention relates to a resin composition comprising from 99.9 to 50% by weight of a polyimide having recurring units represented by the formula: 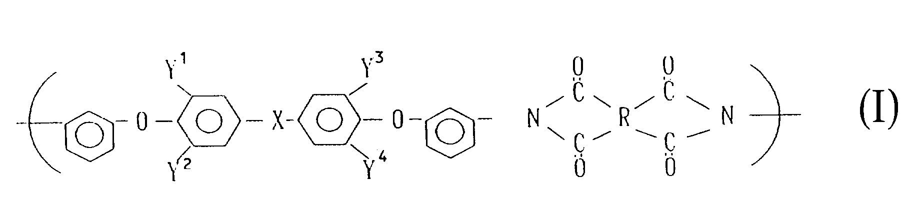 in which X is a direct bond, divalent hydrocarbon having from 1 to 10 carbon atoms, hexafluorinated isopropylidene, carbonyl, thio or sulphonyl, Y¹, Y, Y³ and Y⁴ are individually hydrogen, methyl, methoxy, chlorine or bromine, R is an aliphatic radical having 2 or more carbon atoms, an alicyclic radical, a monocyclic aromatic radical, a fused polycyclic aromatic radical, or a polycyclic aromatic radical represented by: 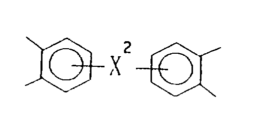 X is a direct bond, -O-,-S -,-SO₂-,-CH₂-,-CO-,-C(CH₃)₂-, -C(CF₃)₂-, 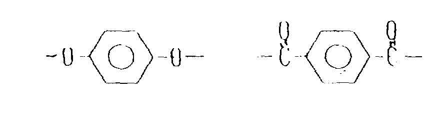 or 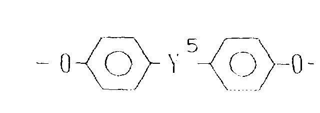
and Y⁵ is a direct bond, -O-, -S-, -SO₂-, -CH₂-, -CO-, -C(CH₃)₂-, or -C(CF₃)₂-, and from 0.1 to 50% weight of a polyester resin capable of forming an anisotropic molten phase.

The polyimide of the present invention is preferably represented by the formula II: 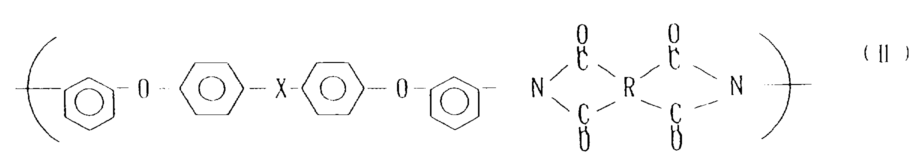 wherein X and R are the same as above.

In the resin composition of the present invention, the polyester resin forms an anisotropic molten phase, preferably at a temperature of 420°C or less, and is preferably a thermotropic liquid-crystal polymer obtained by conducting polymerization so that the polyester bond is formed by basic structural units of the formulas III, IV and V:

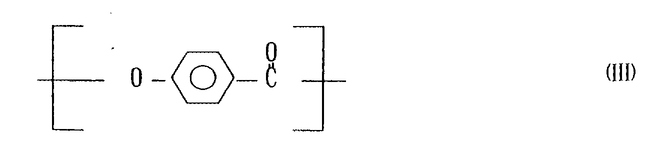

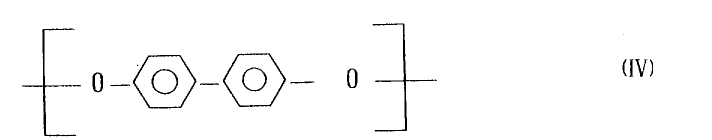

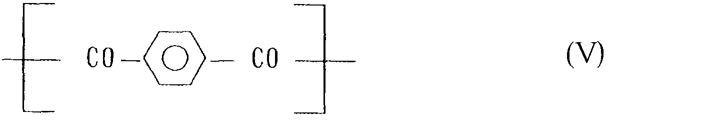

The resin composition of the present invention has remarkably improved processability and enhanced dimensional stability of molded articles upon heat treatment (annealing) step without impairing the excellent characteristics of the polyimide resin.

By blending a polyester capable of forming an anisotropic molten phase, the rate of crystallization is remarkably accelerated and the polyimide resin based composition can shift its exothermic temperature (Tc₁ ) of crystallization to the lower temperature side in a temperature-rise step.

### Description of the Preferred Embodiments

The polyimide used in the present invention is represented by the above formula (I).

The polyimide can be prepared by reacting an ether diamine represented by the formula V: 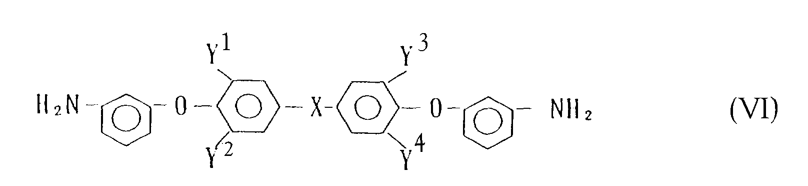 wherein X, Y¹, Y, Y³ and Y⁴ are the same as above, preferably an ether diamine represented by the formula VII: 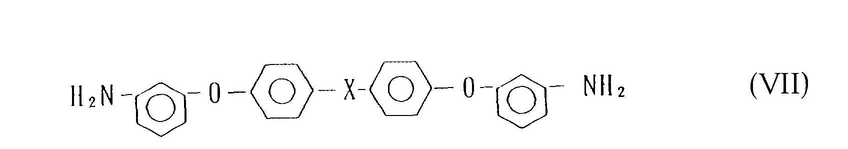 wherein X is the same as above, with one or more tetracarboxlic dianhydrides.

That is, the polyimide can be prepared by reacting the ether diamine with the tetracarboxlic dianhydride in a solvent and then thermally or chemically imidizing the resultant polyamic acid.

The reaction temperature is usually 250 °C or less. No particular restriction is imposed upon the reaction pressure. The reaction can be satisfactorily carried out under atmospheric pressure.

The reaction time varies depending upon the tetracarboxylic dianhydride used, the kind of solvent, and the reaction temperature.

The reaction is usually carried out for a time sufficient to complete formation of the polyamic acid intermediate. Sufficient reaction times are 24 hours or less, an hour or less in some cases.

The above reaction provides the polyamic acid corresponding to the recurring structural units of the formula I. The polyamic acid is successively heat-dehydrated at 100 to 400 °C or chemically imidized by using a common imidizing agent to obtain the polyimide having recurring structural units of the formula I.

Polyimide can also be prepared by simultaneously conducting polyamic acid formation and the heat-imidizing reaction.

The diamine compound for use in the preparation of the above polyimide which is used for the principal component in the composition of the present invention is represented by the above formula VII.

Exemplary diamine compounds include, for example:
bis [4-(3-aminophenoxy)phenyl] methane,
1,1-bis [4-(3-aminophenoxy)phenyl] ethane,
1,2-bis [4-(3-aminophenoxy)phenyl] ethane,
2,2-bis [4-(3-aminophenoxy)phenyl] propane,
2- [ 4-(3-aminophenoxy)phenyl] -2-(4-(3-aminophenoxy)-3-methylphenyl] propane,
2,2-bis [4-(3-aminophenoxy)-3-methylphenyl] propane,
2- [4-(3-aminophenoxy)phenyl] -2- [4-(3-aminophenoxy)-3,5-dimethylphenyl] propane,
2,2-bis [4-(3-aminophenoxy)-3,5-dimethylphenyl) propane,
2,2-bis [4-(3-aminophenoxy)phenyl] butane,
2,2-bis [4-(3-aminophenoxy)phenyl] -1,1,1,3,3,3-hexafluoropropane,
4,4'-bis(3-aminophenoxy)biphenyl,
4,4'-bis(3-aminophenoxy)-3-methylbiphenyl,
4,4'-bis(3-aminophenoxy)-3,3'-dimethylbiphenyl,
4,4'-bis(3-aminophenoxy)-3,5-dimethylbiphenyl,
4,4'-bis(3-aminophenoxy)-3,3',5,5'-tetramethylbiphenyl,
4,4'-bis(3-aminophenoxy)-3,3'-dichlorobiphenyl,
4,4'-bis(3-aminophenoxy)-3,5-dichlorobiphenyl,
4,4'-bis(3-aminophenoxy)-3,3',5,5'-tetrachlorobiphenyl,
4,4'-bis(3-aminophenoxy)-3,3'-dibromobiphenyl,
4,4'-bis(3-aminophenoxy)-3,5-dibromobiphenyl,
4,4'-bis(3-aminophenoxy)3,3',5,5'-tetrabromobiphenyl,
bis [4-(3-aminophenoxy)phenyl] ketone,
bis [4-(3-aminophenoxy)phenyl] sulfide,
bis [4-(3-aminophenoxy)-3-methoxyphenyl] sulfide,
[4-(3-aminophenoxy)phenyl] [4-(3-aminophenoxy)-3,5-dimethoxyphenyl] sulfide,
bis [4-(3-aminophenoxy)-3,5-dimethoxyphenyl] sulfide,
bis [4-(3-aminophenoxy) phenyl] sulfone,
bis [4-(3-aminophenoxy)phenyl] ether,
bis [4-(4-aminophenoxy)phenyl] ether,
1,4 bis [4-(3-aminophenoxy)phenoxy] benzene,
1,4-bis [4-(4-aminophenoxy)phenoxy] benzene,
1,4-bis [4-(3-aminophenoxy)benzoyl] benzene,
1,3-bis [4-(3-aminophenoxy)benzoyl] benzene,
bis [4-{4-(4-aminophenoxy)phenoxy} phenyl] sulfone,
and bis [4-{4-(4-aminophenoxy)phenoxy} phenyl] ketone. The diaminocompound may be used a single compound or a mixture thereof.

The tetracarboxylic dianhydride which is another raw material for preparing polyimide of the formula (I) is represented by the formula VIII: 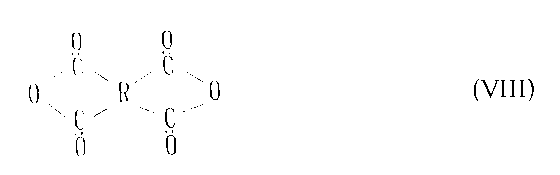 wherein R is the same as above.

In the tetracarboxylic dianhydride represented by the formula VIII, R is preferably a tetravalent radical represented by the formula IX: 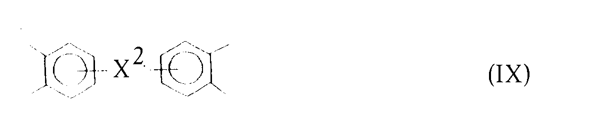 wherein X is a direct bond, -O-, -S-, -SO₂, -CO-, -C(CH₃)₂-, -C(CF₃)₂- 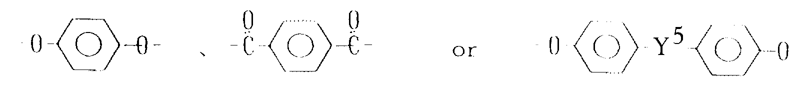 wherein Y⁵ is a direct bond, -O-,-S-,-SO₂-,-CH₂-,-CO-, -C(CH₃)₂- or -C(CF₃)₂-.

Consequently, in the polyimide of the formula I, R is preferably represented by the formula IX.

The tetracarboxylic dianhydrides used as a raw material in the preparation of polyimide include, for example,
ethylenetetracarboxylic dianhydride,
butanetetracarboxylic dianhydride,
cyclopentanetetracarboxylic dianhydride,
pyromellitic dianhydride,
3,3',4,4'-benzophenonetetracarboxylic dianhydride,
2,2',3,3'-benzophenonetetracarboxylic dianhydride,
3,3',4,4'-biphenyltetracarboxylic dianhydride,
2,2',3,3'-biphenyltetracarboxylic dianhydride,
2,2-bis(3,4-dicarboxyphenyl)propane dianhydride,
2,2-bis(2,3-dicarboxyphenyl)propane dianhydride,
bis [3,4-dicarboxyphenyl)ether dianhydride,
bis(3,4-dicarboxyphenyl)sulfone, dianhydride,
1,1-bis(2,3-dicarboxyphenyl)ethane dianhydride,
bis(2,3-dicarboxyphenyl)methane dianhydride,
bis(3,4-dicarboxyphenyl)methane dianhydride,
4- [4-(3,4-dicarboxyphenoxy)phenoxy] phthalic dianhydride,
2,3,6,7-naphthalenetetracarboxylic dianhydride,
1,4,5,8-naphthalenetetracarboxylic dianhydride,
1,2,5,6-naphthalenetetracarboxylic dianhydride,
1,2,3,4-benzenetetracarboxylic dianhydride,
3,4,9,10-perylenetetracarboxylic dianhydride,
2,3,6,7-anthracenetetracarboxylic dianhydride,
and 1,2,7,8-phenanthrenetetracarboxylic dianhydride.

The tetracarboxylic dianhydride can be used singly or in combination.

The polyimide used in the composition of the invention is prepared by using the above etherdiamine as a raw material. The polyimide prepared by simultaneous use of other diamines can also be used for the composition of the invention as long as no adverse effect is found on the good properties of the polyimide.

Exemplary diamines which can be simultaneously used include
m-phenylenediamine, o-phenylenediamine, p-phenylenediamine,
m-aminobenzylamine, p-aminobenzylamine, bis(3-aminophenyl) ether,
(3-aminophenyl)(4-aminophenyl) ether, bis(4-aminophenyl) ether,
bis(3-aminophenyl) sulfide, (3-aminophenyl)(4-aminophenyl) sulfide,
bis(4-aminophenyl) sulfide, bis(3-aminophenyl) sulfoxide,
(3-aminophenyl)(4-aminophenyl) sulfoxide,
bis(4-aminophenyl) sulfoxide, bis(3-aminophenyl) sulfone,
(3-aminophenyl)(4-aminophenyl) sulfone, bis(4-aminophenyl) sulfone,
3,3'-diaminobenzophenone, 3,4'-diaminobenzophenone,
4,4'-diaminobenzophenone, bis [4-(4-aminophenoxy)phenyl] methane,
1,1-bis [4-(4-aminophenoxy)phenyl] ethane,
1,2-bis [4-(4-aminophenoxy)phenyl] ethane,
2,2-bis [4-(4-aminophenoxy)phenyl] propane,
2,2-bis [4-(4-aminophenoxy)phenyl] butane,
2,2-bis [4-(4-aminophenoxy)phenyl] -1,1,1,3,3,3-hexafluoropropane,
1,3-bis(3-aminophenoxy)benzene, 1,3-bis(4-aminophenoxy)benzene,
1,4-bis(3-aminophenoxy)benzene, 1,4-bis(4-aminophenoxy)benzene,
4,4'-bis(4-aminophenoxy)biphenyl,
bis [4-(4-aminophenoxy)phenyl] ketone,
bis [4-(4-aminophenoxy)phenyl] sulfide,
bis [4-(4-aminophenoxy)phenyl] sulfoxide,
bis [4-(4-aminophenoxy)phenyl] sulfone,
bis [4-(3-aminophenoxy)phenyl] ether,
bis [4-(4-aminophenoxy)phenyl] ether,
1,4-bis [4-(4-aminophenoxy)benzyl] benzene,
and 1,4-bis [4-(4-aminophenoxy)benzyl] benzene.

The resin composition of the present invention can be obtained by blending the above polyimide resin with the following components.

That is, the component to be blended with the polyimide resin in the composition of the invention is polyester resin.

The resin composition of the invention exhibits remarkable low melt viscosity in a high temperature range of 300 °C or more. The polyester resin provides a good fluidizing effect on the resin composition and the effect can be observed even in a small amount. The lower limit of the polyester resin content in the composition is 0.1 %, preferably 0.5 % by weight.

The composition obtained by using a polyester which forms an anisotropic molten phase can provide excellent performance, that is, chemical resistance, flame retardance and mechanical strength which are superior to those of conventional thermal-resistant resins.

When some kinds of anisotropic molten phase forming polyesters are used in a large amount, it is liable to cause problems such as too high anisotropy of mechanical properties, formation of fibrils, and insufficient weld strength. Thus the polyester resin is controlled to a smaller amount in the composition. Usually the preferred amount of the polyester resin is 50 % by weight or less.

The composition of the invention can be prepared by generally known processes. For example, preferred processes are illustrated below.
① A process for preparing powder by preblending polyimide resin powder and polyester resin powder in a mortar, Henshel mixer, drum blender, tumbler, ball mill and ribbon blender.
② A process for preparing powder by previously dissolving or suspending polyimide resin powder in an organic solvent, adding polyester resin to the resulting solution or suspension, dispersing uniformly and thereafter removing the solvent.
③ A process for preparing powder by suspending polyester resin in an organic solvent solution of polyamic acid which is the precursor of polyimide in the invention, carrying out heat-treatment at 100 to 400 °C or chemical imidization by using of a common imidizing agent, and then removing the solvent.

The powdery polyimide resin composition thus obtained can be used as such for various molding processes, for example, injection molding, compression molding and transfer molding. However, molding is more preferably carried out after melting and mixing each component of the composition.

In the preparation of a melt-mixed composition, it is also a simple and effective method to mix and mold powders with each other, pellets with each other, or powder and pellets.

Melt-mixing can be conducted by utilizing equipment for melt-blending common rubber or plastics, for example, hot rolls, Banbury mixer, Brabander and an extruder.

Melt-mixing is carried out in the range of from the melt temperature to the decomposition-initiating temperature of the formulation. The temperature is usually from 250 to 420 °C, preferably from 300 to 400 °C.

As to the process for molding the resin composition of the invention, suitable process is injection molding or extruding which is a process capable of forming a uniformly melted blend and which has a high productivity. Other molding processes such as transfer molding, compression molding and sinter molding can also be applied without any problem.

In the present invention, one or more additives can be added to the composition, if desired.

Exemplary additives which can be used include, fillers such as calcium carbonate, mica, glass beads, graphite, and molybdenum disulfide; fiber reinforcements such as glass fibers, carbon fibers, ceramic fibers, aramide fibers, potassium titanate fibers and metal fibers; lubricants; release agents; stabilizers; colorants; other thermoplastic resin such as polyphenylene sulfide, polyether imide, polyether sulfone, and polyether ether ketone; and thermosetting resins such as phenol resin, epoxy resin, silicone resin and polyamide imide resin.

The present invention will hereinafter be illustrated further in detail by way of examples and comparative examples.

In the examples and comparative examples, physical properties were determined by the following methods.

### ○ Inherent viscosity:

0.5 g of polyimide powder was dissolved in 100 *mℓ* of a solvent mixture consisted of p-chlorophenol/phenol in a ratio of 9/1 by weight. Measurement was conducted after cooling the solution to 35 °C

### ○ Tensile strength :

Measured in accordance with ASTM D-638 by using a tensile test specimen without a weld and a tensile test specimen welded at the center of the parallel portion.

### ○ Elongation at break :

Measured in accordance with ASTM D-638.

### ○ Izod impact strength :

Measured in accordance with ASTM D-258.

### ○ Heat distortion temperature (HDT):

Measured in accordance with ASTM D-648.

### ○ Melt Flow Ratio (MFR):

Measurement was conducted at 400 °C, under 1.05 kg load in accordance with JIS K-7210.

### ○ Spiral flow length:

Measurement was conducted at a cylinder temperature of 400 °C, mold temperature of 180 °C, injection pressure of 1000 kg/cm and cavity thickness of 1 mm.

### ○ Heat shrinkage :

Heat treatment was carried out under below described conditions on a tensile test specimen in accordance with ASTM D-638. Dimensional change in the longer direction of the specimen was measured before and after the heat treatment. Heat treatment carried out in three heating steps, 150 °C × 20 hrs → 260 °C × 20 hrs → 300°C × 2 hrs.

### ○ Wrapage:

Injection molded plate (75 X 100 X 2 mm) is heated and change of warpage height in longer direction was measured between before and after treatment.

### ○ Peak temperature (Tc) of crystallization exotherm :

Peak temperature (Tc₁ ) of crystallization exotherm under a temperature-rise rate of 10 °C/min from the room temperature and peak temperature (Tc₂ ) of crystallization exotherm under a temperature-fall rate of 10 °C/min from 400 °C were measured by using a differential scanning calorimeter.

### ○ Coefficient of linear thermal expansion :

Coefficient of linear thermal expansion from 25 to 200 °C was measured with a thermal expansion tester by using unwelded tensile specimens of flow direction (MD) and transverse direction (TD). ○ The ratio TD/MD of the linear expansion coefficient was assumed as being anisotropic.

### Examples 1 to 5 and Comparative Examples 1 and 2

Polyimide having an inherent viscosity of 0.45 dℓ/g prepared from 4,4-bis(3-aminophenoxy)biphenyl and pyromellitic dianhydride. The polyimide obtained was dry blended with a thermotropic liquid-crystal polymer Xydar SRT-50 (Trade Mark of DARTCO CO. Ltd.) in compositions as illustrated in the Table. The mixtures thus obtained were melt-kneaded in an extruder at a cylinder temperature of 400 °C and extruded and cut into pellets.

The pellets were injection molded at a cylinder temperature of 380 to 410 °C, mold temperature of 190 °C and injection pressure of 500 kg/cm to obtain tensile test specimens. Tensile test specimens having a weld at the center of the parallel portion were also injection molded under the same conditions. Results of tensile strength test are illustrated in the Table.

Spiral flow length was measured at a cylinder temperature of 400 °C, mold temperature of 180 °C, injection pressure of 1000 kg/cm and cavity thickness of 1 mm. Results are illustrated in the Table.

Heat shrinkage, coefficient of linear expansion and peak temperature (Tc) of crystallization exotherm were measured by using injection molded tensile specimens without a weld. Results are illustrated in the Table. The ratio TD/MD of the coefficient of linear thermal expansion was assumed as being anisotropic and are also illustrated in the Table.

### Example 6

The same procedures as described in Example 2 were carried out except that ECONOL E-6000 (Trade Mark of Sumitomo Chemical Co. Ltd.) was used as a thermotropic liquid-crystal polymer. Results are illustrated in the Table.

### Example 7

The same procedures as described in Example 4 were carried out except that ECONOL E-6000 (Trade Mark of Sumitomo Chemical Co. Ltd.) was used as a thermotropic liquid-crystal polymer.

### Comparative Example 3

The same procedures as described in Comparative Example 2 were carried out except that ECONOL E-6000 (Trade Mark of Sumitomo Chemical Co. Ltd.) was used as a thermotropic liquid-crystal polymer. Results are illustrated in the Table.

### Example 8

The same procedures as described in Example 3 were carried out except that polyimide prepared from
bis [4-(3-aminophenoxy)phenyl) sulfide and pyromellitic dianhydride and having an inherent viscosity of 0.46 *dℓ*/g was used. Results are illustrated in the Table.

### Comparative Example 4

The same procedures as described in Comparative Example 1 were carried out except that polyimide prepared from
bis [4-(3-aminophenoxy)phenyl) sulfide and pyromellitic dianhydride and having an inherent viscosity of 0.46 *dℓ*/g was used. Results are illustrated in the Table.

### Comparative Example 5

The same procedures as described in Comparative Example 2 were carried out except that polyimide prepared from
bis [4-(3-aminophenoxy)phenyl] sulfide and pyromellitic dianhydride and having an inherent viscosity of 0.46 *dℓ*/g was used. Results are illustrated in the Table .

### Example 9

The same procedures as described in Example 3 were carried out except that polyimide prepared from
2,2-bis [4-(3-aminophenoxy)phenyl] propane and
3,3',4,4'-benzophenonetetracarboxylic dianhydride and having an inherent viscosity of 0.45 *dℓ*/g was used. Results are illustrated in the Table.

### Comparative Example 6

The same procedures as described in Comparative Example 1 were carried out except that polyimide prepared from
2,2-bis [4-(3-aminophenoxy)phenyl] propane and 3,3',4,4'-benzophenonetetracarboxylic dianhydride and having an inherent viscosity of 0.45 *dℓ*/g was used. Results are illustrated in the Table.

### Comparative Example 7

The same procedures as described in Comparative Example 2 were carried out except that polyimide prepared from
2,2-bis [4-(3-aminophenoxy)phenyl] propane and
3,3',4,4'-benzophenonetetracarboxylic dianhydride and having an inherent viscosity of 0.45 dℓ/g was used. Results are illustrated in the Table.

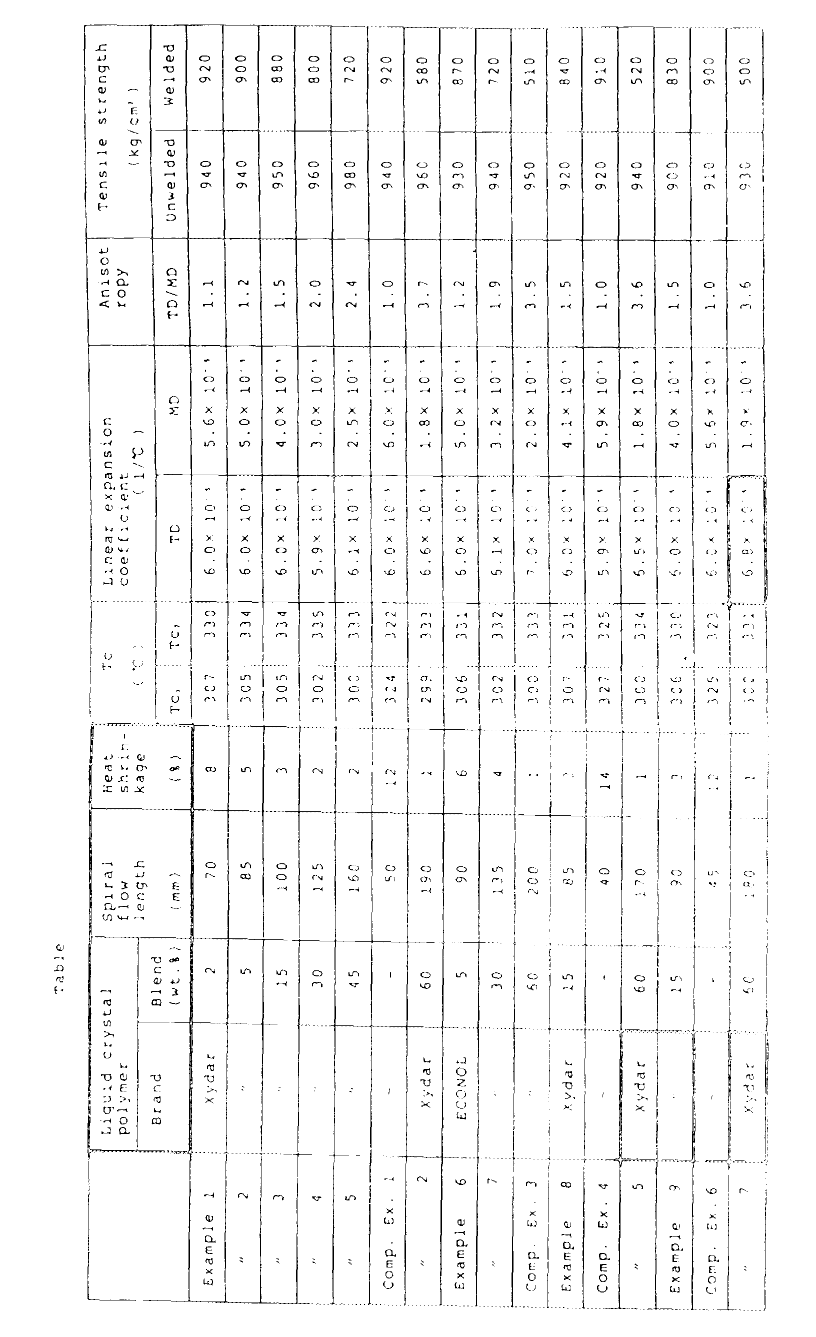

## Claims

1. A resin composition comprising from 99.9 to 50% by weight of a polyimide having recurring units represented by the formula: 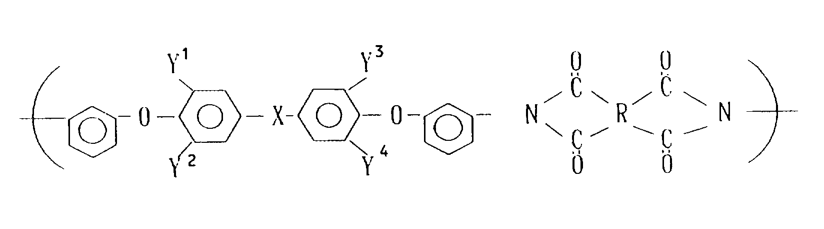 in which X is a direct bond, divalent hydrocarbon having from 1 to 10 carbon atoms, hexafluorinated isopropylidene, carbonyl, thio or sulphonyl, Y¹, Y, Y³ and Y⁴ are individually hydrogen, methyl, methoxy, chlorine or bromine, R is an aliphatic radical having 2 or more carbon atoms, an alicyclic radical, a monocyclic aromatic radical, a fused polycyclic aromatic radical, or a polycyclic aromatic radical represented by: 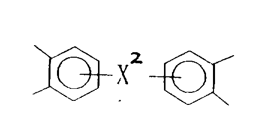
X is a direct bond, -O-,-S-,-SO₂-,-CH₂-,-CO-,-C(CH₃)₂-, -C(CF₃)₂-, 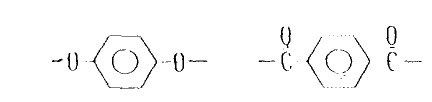 or 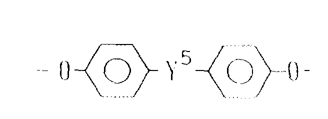
and Y⁵ is a direct bond, -O-, -S-, -SO₂-, -CH₂-, -CO-, -C(CH₃ )₂-, or -C(CF₃ )₂-,
and from 0.1 to 50% weight of a polyester resin capable of forming an anisotropic molten phase.

2. A resin composition as claimed in Claim 1 in which the polyimide is represented by the formula: 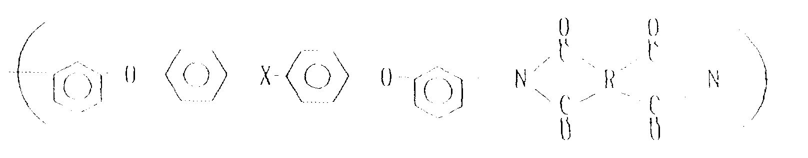 in which X and R are as defined in Claim 1.

3. A resin composition as claimed in Claim 1 or Claim 2 in which the polyester resin is an aromatic polyester resin capable of forming an anisotropic molten phase at a temperature of 420°C or less.

4. A resin composition as claimed in Claim 3 in which the aromatic polyester resin is a thermotropic liquid-crystal polymer obtained by polymerizing so that the polyester bond is formed by basic structural units represented by the formulae: 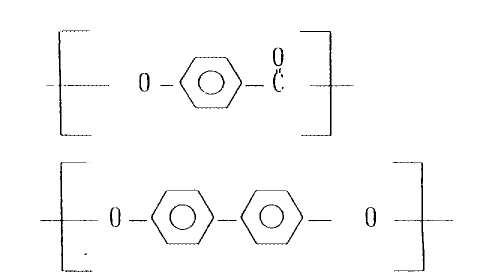 and

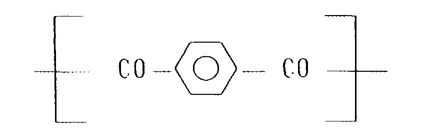

## Patentansprüche

1. Eine Harzzusammensetzung, bestehend aus 99,9 bis 50 Masse-% eines Polyimids mit wiederkehrenden Einheiten der Formel 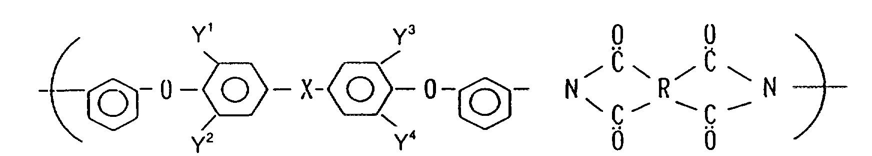 worin X eine direkte Bindung, ein bivalenter Kohlenwasserstoff mit bis 10 Kohlenstoffatomen, hexafluoriertes Isopropyliden, Carbonyl, Thio oder Sulfonyl ist, Y¹, Y, Y³ und Y⁴ im einzelnen Wasserstoff, Methyl, Methoxy, Chlor oder Brom darstellen, R ein aliphatisches Radikal mit 2 oder mehr Kohlenstoffatomen, ein alicyclisches Radikal, ein monocyclisches aromatisches Radikal, ein verschmolzenes polycyclisches aromatisches Radikal oder ein polycyclisches aromatisches Radikal der Formel 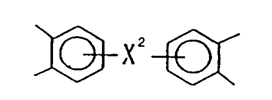
darstellen, X eine direkte Bindung, -O-, -S-, -SO₂-, -CH₂-, -CO-, -C(CH₃)₂-,-C(CF₃)₂-, 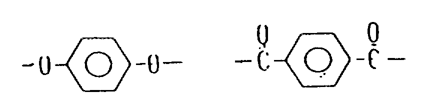 oder 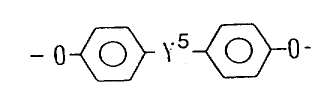
und Y⁵ eine direkte Bindung, -O-, -S-, -SO₂-, -CH₂-, -CO-, -C(CH₃)₂- oder - C(CF₃)₂ist,
und zwischen 0,1 und 50 Masse-% eines Polyesterharzes, das zur Bildung einer anisotropischen Schmelzphase in der Lage ist.

2. Eine Harzzusammensetzung gemäß Anspruch 1, worin das Polyimid durch folgende Formel dargestellt wird: 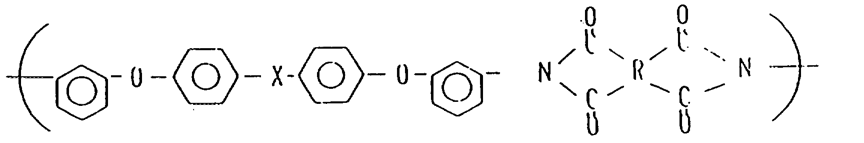 worin X und R gemäß Anspruch 1 definiert werden.

3. Eine Harzzusammensetzung gemäß Anspruch 1 oder 2, worin das Polyesterharz ein aromatisches Polyesterharz darstellt, das zur Bildung einer anisotropischen Schmelzphase bei einer Temperatur von 420 °C oder weniger in der Lage ist.

4. Eine Harzzusammensetzung gemäß Anspruch 3, worin es sich bei dem aromatischen Polyesterharz um ein thermotropes Flüssigkeitskristallpolymer handelt, das durch Polymerisation gewonnen wird, so daß die Polyesterbindung durch strukturelle Grundeinheiten folgender Formel erreicht wird: 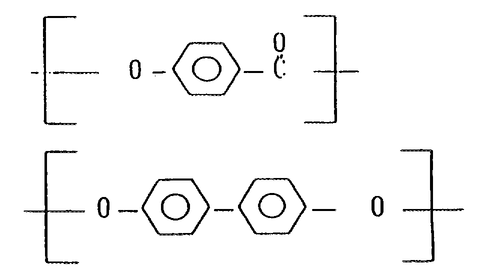 und

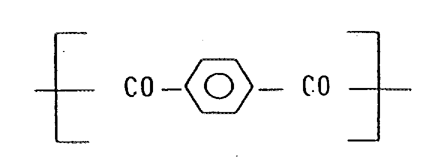

## Revendications

1. Composition de résine comprenant de 99,9 à 50 % en poids d'un polyimide ayant des unités récurrentes représentées par la formule : 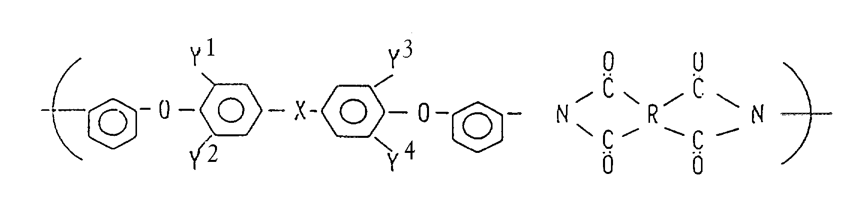 dans laquelle X est une liaison directe, un hydrocarbure divalent ayant de 1 à 10 atomes de carbones, un isopropylidène hexafluoré, un carbonyle, un thio ou sulphonyl, Y¹, Y, Y³, et Y⁴ sont respectivement de l'hydrogène, du méthyle, du méthoxy, du chlore ou du brome, R est un radical aliphatique ayant 2 atomes de carbone ou plus, un radical alicyclique, un radical aromatique monocyclique, un radical aromatique polycyclique fusionné, ou un radical aromatique polycyclique représenté par 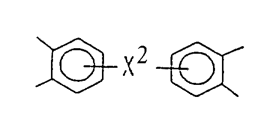
x est une liaison directe, -O-, -S-, -SO₂-, CH₂-, -CO-, -C(CH₃)₂-,-C(CF₃)₂-, 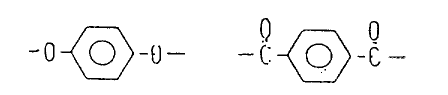 ou 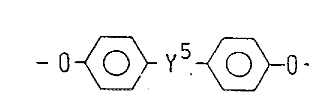
Y⁵ est une liaison directe, -O-, -S-,-SO₂-, -CH₂-, -CO-, -C(CH₃)₂-, ou -C(CF₃)₂-,
et de 0,1 à 50 % en poids d'une résine polyester capable de former une phase en fusion anisotrope.

2. Composition de résine selon la revendication 1, dans laquelle le polyimide est représenté par la formule : 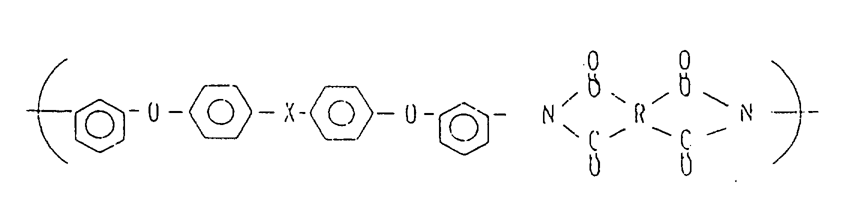 dans laquelle X et R sont définis dans la revendication 1.

3. Composition de résine selon la revendication 1 ou la revendication 2, dans laquelle la résine polyester est une résine polyester aromatique capable de former une phase en fusion anisotrope à une température de 420° C ou moins.

4. Composition de résine selon la revendication 3, dans laquelle la résine polyester aromatique est un polymère cristallin-liquide thermotrope obtenu par polymérisation, de manière que la liaison polyester soit formée par des unités structurelles de base représentées par les formules : 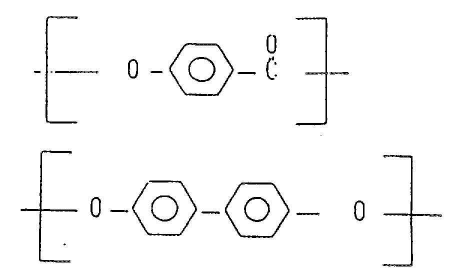 et
